# EUROPÄISCHE PATENTSCHRIFT

(11) **EP 1 380 471 B1**
(45) Veröffentlichungstag und Bekanntmachung des Hinweises auf die Patenterteilung: **16.11.2005**
(21) Anmeldenummer: 03015766.3
(22) Anmeldetag: 10.07.2003
(51) Int. Cl.: B60R 15/00

(54) **Wohnmobil**
Camping vehicle
Véhicule de camping

(30) Priorität: 12.07.2002 DE 10231842
(43) Veröffentlichungstag der Anmeldung: 14.01.2004
(73) Patentinhaber: Schuler, Karl-Heinz, D-88213 Ravensburg (DE)
(72) Erfinder: Schuler, Karl-Heinz, D-88213 Ravensburg (DE)
(74) Vertreter: Engelhardt, Volker

(56) Entgegenhaltungen:
- EP-A- 0 248 507
- EP-A- 0 812 732
- DE-A- 2 751 015
- DE-A- 4 200 476
- DE-U- 7 415 297
- DE-U- 20 005 459
- FR-A- 2 805 838

## Beschreibung

Die Erfindung bezieht sich auf ein Wohnmobil, dessen Rückwand und dessen Seitenwände auf einem Fahrgestell abgestützt sind, mit einer in das Innere des Wohnmobils ragenden Zwischenwand, wobei die Rückwand, die Seitenwände und die Zwischenwand einen quaderförmigen sich über die gesamte oder einen großen Teil der Breite des Wohnmobils erstreckenden Stauraum bilden, der mittels einer zwischen der Rückwand und der Zwischenwand angeordneten Abdeckung vom Inneren des Wohnmobils abgetrennt ist. Dokument DE-A-2751015 veröffentlicht ein solches Wohnmobil.

Ein solcher Stauraum wird üblicherweise für die Lagerung und den Transport von Fahrrädern, Motorrädern, Motorrollern oder dgl. verwendet, da sowohl die Breite als auch die Höhe des Stauraumes für derart sperrige Gegenstände ausreichend Platz bietet.

Als nachteilig bei den bekannten verwendeten Stauräumen hat sich herausgestellt, dass die Seitenwand und die Abdeckung in das Innere des Wohnmobils angeordnet sind, und zwar auch, wenn der Boden des Stauraumes gegenüber dem Höhenniveau des Fahrgestellbodens abgesenkt ist. Folglich benötigt der Stauraum ein entsprechendes Volumen, das zum Großteil vom Inneren des Wohnmobils abzuzweigen ist. Um die Abdeckung des Stauraumes und die Seitenwand einem dem Wohnmobil gerechten Einsatzzweck zuzuführen, sind diese oftmals als Sitz- oder Liegeflächen ausgebildet.

Jedoch ist der Platz oberhalb der Sitz- oder Liegefläche mit einer solchen Verwendungsmöglichkeit nicht optimal ausgenutzt, da dieser nicht benutzt werden kann.

Es ist daher Aufgabe der Erfindung, ein Wohnmobil der eingangs genannten Gattung derart weiterzubilden, dass der in das Innere des Wohnmobils hineinragende Bereich des Stauraumes optimal im Innern des Wohnmobils integriert ist und somit ein erhöhtes Platzangebot zur Verfügung steht.

Diese Aufgabe wird erfindungsgemäß dadurch gelöst, dass über der Abdeckung eine parallel und beabstandet zu dieser verlaufende Trageplatte vorgesehen ist, die sich bereichsweise oder über die gesamte Breite des Wohnmobils erstreckt, und daß in die Trageplatte ein Waschbecken, Sanitärarmaturen und/oder eine Toilette eingesetzt sind.

Um die für die Sanitärarmaturen notwendigen Wasserzu- und Ableitungen abzudecken, sind diese zwischen der Trageplatte, der Abdeckung und der Zwischenwand angeordnet.

Zwecks optimaler Platzausnutzung kann über dem Waschbecken oder seitlich neben diesem an der Rückwand ein Spiegelschrank, ein Kleiderschrank, eine Ablage und/oder dgl. befestigt sein. Der Spiegelschrank wird üblicherweise über dem Waschbecken angeordnet.

Damit auch die für das Wohnmobil notwendigen Küchenmöbel, insbesondere eine Arbeitsplatte und das von dieser gehaltene Spülbecken, optimal im Wohnmobil integriert sind, ist die Arbeitsplatte an einer der beiden Seitenwände des Wohnmobils parallel zu dieser verlaufend angebracht, so daß die Arbeitsplatte auf der Abdeckung des Stauraums ganz oder teilweise abgestützt ist.

Zur optimalen Platzausnutzung des Innenraums des Wohnmobils ist die Trageplatte in einem der beiden Eckbereiche des Wohnmobils angeordnet.

Es ist besonders vorteilhaft, im Innern des Wohnmobils eine oder mehrere Trennwände vorzusehen, durch die das Waschbecken und der Spiegelschrank in einen separaten Waschraum abgetrennt sind.

Weitere vorteilhafte Merkmale der Erfindung ergeben sich aus den Unteransprüchen.

Dadurch, daß das Waschbecken unmittelbar oberhalb des Stauraumes zwischen zwei parallel zueinander verlaufenden Platten angeordnet ist, kann die Erhebung in das Innere des Wohnmobils durch den Stauraum optimal ausgenutzt werden, so dass der in das Innere ragende Teil des Stauraums dem Benutzer visuell nicht auffällt.

Darüber hinaus nimmt der durch Trennwände abgetrennte Bereich des Waschraums lediglich optisch einen kleinen Teil des Heckbereiches des Wohnmobils ein und erstreckt sich nicht über die gesamte Breite des Wohnmobils, so dass an der gegenüberliegenden Seitenwand der Außenverkleidung noch die Möglichkeit besteht, eine Küchenzeile, insbesondere eine Arbeitsplatte anzubringen. Zwischen der Trennwand und der Arbeitsplatte ist somit ein Durchgang geschaffen.

Oberhalb der Decke des Stauraumes kann im Bereich des Durchganges ein Kleiderschrank, ein Küchenschrank oder dgl. vorgesehen werden, so dass der Bereich unmittelbar um den Stauraum für den Benutzer des Wohnmobils optimal ausgenutzt ist. Gleichzeitig sieht diese Anordnung optisch gut aus, da der Stauraum in die im Inneren des Wohnmobils vorgesehenen Möbel integriert ist.

In der Zeichnung ist ein erfindungsgemäßes Ausführungsbeispiel dargestellt, das nachfolgend näher erläutert wird. Im einzelnen zeigt:
- Figur 1: ein Wohnmobil mit einem in dessen Heckbereich vorgesehenen Stauraum, in Seitenansicht,
- Figur 2: das Wohnmobil gemäß Figur 1, in Draufsicht,
- Figur 3: das Wohnmobil gemäß Figur 1 entlang der Schnittlinie III - III
- Figur 4: das Wohnmobil gemäß Figur 1 entlang der Schnittlinie IV - IV und
- Figur 5: das Wohnmobil gemäß Figur 1 in Draufsicht, wobei über dem Stauraum bereichsweise eine Liegefläche vorgesehen ist.

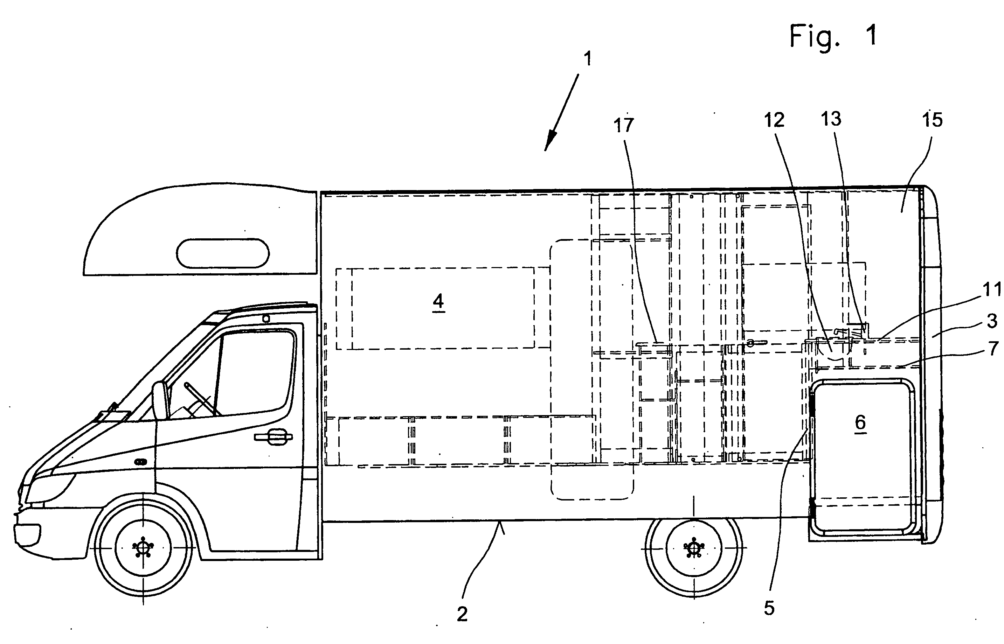

Aus der Figur 1 ist ein Wohnmobil 1 mit einem Fahrgestell 2 zu entnehmen. Durch das Fahrgestell 2 werden die Rückwand 3 sowie die beiden Seitenwände 4 abgestützt. Im Inneren des Wohnmobiles 1 ist eine senkrecht vom Fahrgestell 2 abstehende sich über die gesamte Breite des Wohnmobils 1 erstreckende Zwischenwand 5 angebracht. Somit schließen die Rückwand 3, Teile der beiden Seitenwände 4 und die Zwischenwand 5 einen Stauraum 6 ein, der im Heckbereich des Wohnmobils 1 für den Transport von Fahrrädern, Motorrollern, Motorrädern oder ähnliches vorgesehen ist. Der Stauraum 6 ist von oben mit einer Abdeckung 7 verschlossen.

Um die Höhe des Stauraumes 6 für den Transport solcher Gegenstände ausreichend zu dimensionieren, ist auch der Boden des Stauraumes 6 gegenüber dem Boden des Fahrgestelles 2 abgesenkt. Gleichwohl ragt der Stauraum 6 in das Innere des Wohnmobiles 1, so daß der vom Strauraum 6 eingenommene Platz für die Inneneinrichtungsgegenstände des Wohnmobiles 1 verloren ist.

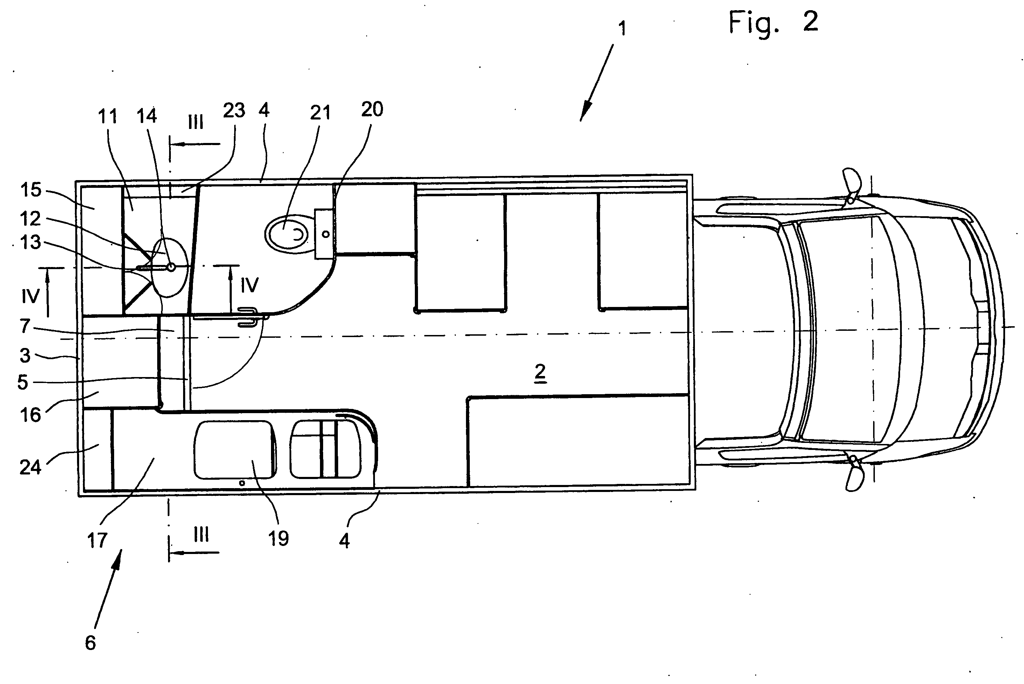

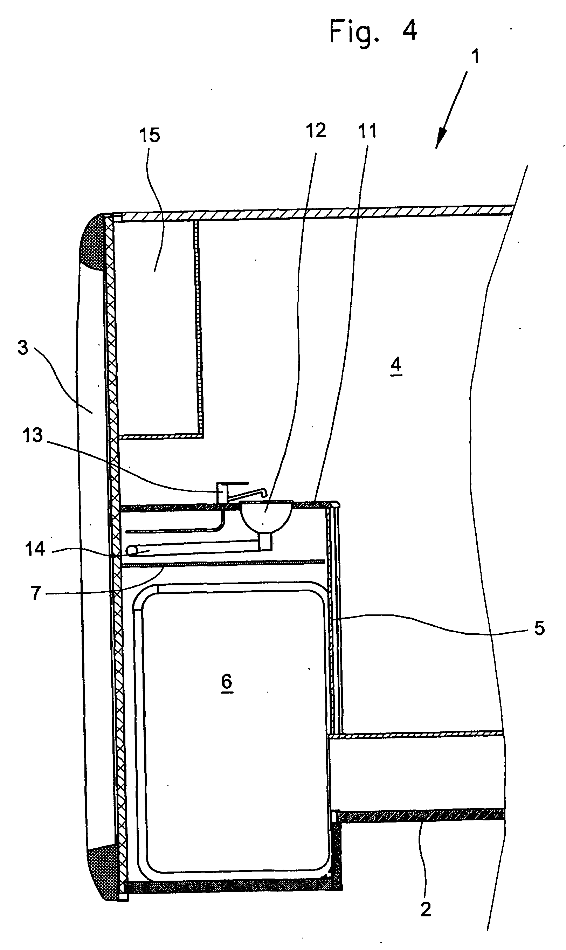

Insbesondere den Figuren 2, 3 und 4 kann die vorteilhafte Integration des Stauraumes 6 in den Innenraum des Wohnmobiles 1 entnommen werden, denn parallel und beabstandet zu der Abdeckung 7 ist in einem Eckbereich im Heck des Wohnmobiles 1 eine Trageplatte 11 angebracht, in die ein Waschbecken 12 eingesetzt ist. Das Waschbecken 12 weist einen Wasserhahn 13 und einen Wasserabfluß 14 auf. Die Wasserzu- und Ableitungen sind durch die Trageplatte 11, die Zwischenwand 5 sowie die Seitenwand 4 und die Rückwand 3 verkleidet. Seitlich neben der Trageplatte 11 ist eine Ablage 23 vorgesehen, die die Stellfläche der Trageplatte 11 vergrößert.

Fluchtend zu dem Waschbecken 12 ist ein Spiegelschrank 15 an der Rückwand 3 befestigt. Folglich ist für den Benutzer in dem Waschbereich des Wohnmobiles 1 die Ausbildung des Stauraumes 6 nicht ersichtlich, so daß dieser visuell in die Inneneinrichtungsgegenstände des Wohnmobiles 2 integriert ist.

Der Waschbereich kann mittels Trennwänden 20 von dem Wohnbereich des Wohnmobils 1 abgetrennt werden, der durch eine Tür betreten werden kann. In diesem Waschbereich können auch andere sanitäre Einrichtungsgegenstände, wie beispielsweise eine Toilette 21, eine Naßzelle mit einer Duschwanne vorgesehen sein, so daß der zur Verfügung stehende Platz für die sanitären Einrichtungsgegenstände optimal ausgenutzt ist.

Über den weiteren Bereich des Stauraumes 6 ist seitlich neben dem Spiegelschrank 15 ein Kleiderschrank 16 angebracht, der sich über die gesamte zur Verfügung stehende Höhe zwischen der Abdeckung 7 des Stauraumes 6 und der Decke des Wohnmobiles 1 erstreckt. Dieser Kleiderschrank 16 ist von vorne problemlos zugänglich.

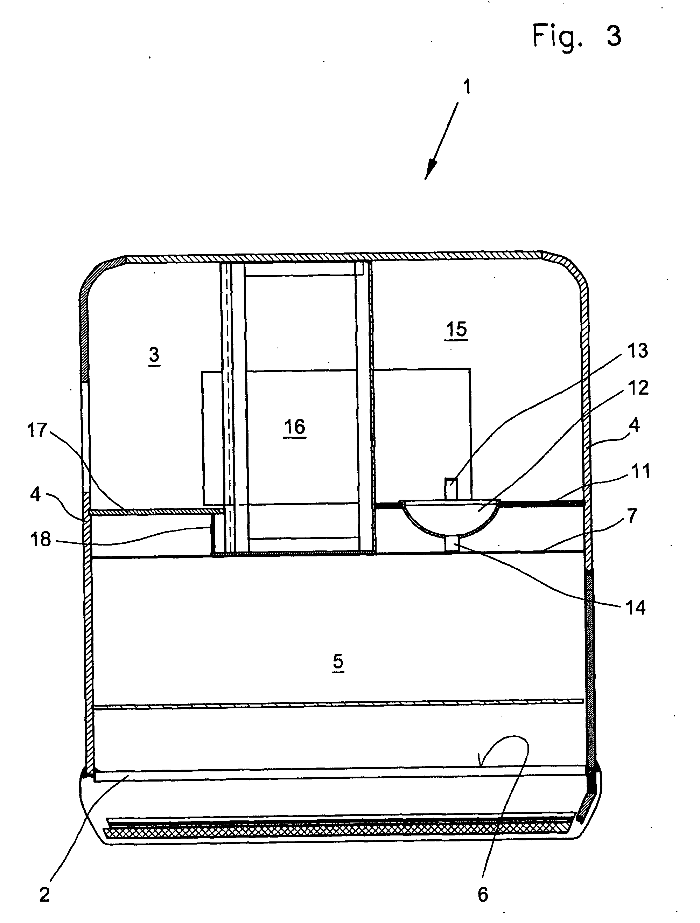

In Figur 2 ist seitlich neben dem Kleiderschrank 16 eine Arbeitsplatte 17 angeordnet, in die ein Spülbecken 19 eingesetzt ist. Die Arbeitsplatte 17 ist über ein Stützelement 18, wie dies insbesondere in Figur 3 gezeigt ist, auf der Abdeckung 7 abgestützt. Die Arretierung der Arbeitsplatte 17 an der Seitenwand 4 erfolgt über Leisten oder über Nuten, in die die Arbeitsplatte 17 eingeschoben ist. Über der Arbeitsplatte 17 ist an der Rückwand 3 ein Küchenschrank 24 angebracht, so daß auch der Raum neben dem Kleiderschrank 16 sinnvoll ausgefüllt ist. Es ist denkbar, die Arbeitsplatte 17 parallel zu der Rückwand 3 verlaufend anzuordnen, so daß sich die Arbeitsplatte 17 über die gesamte Breite des Stauraums 6 erstreckt.

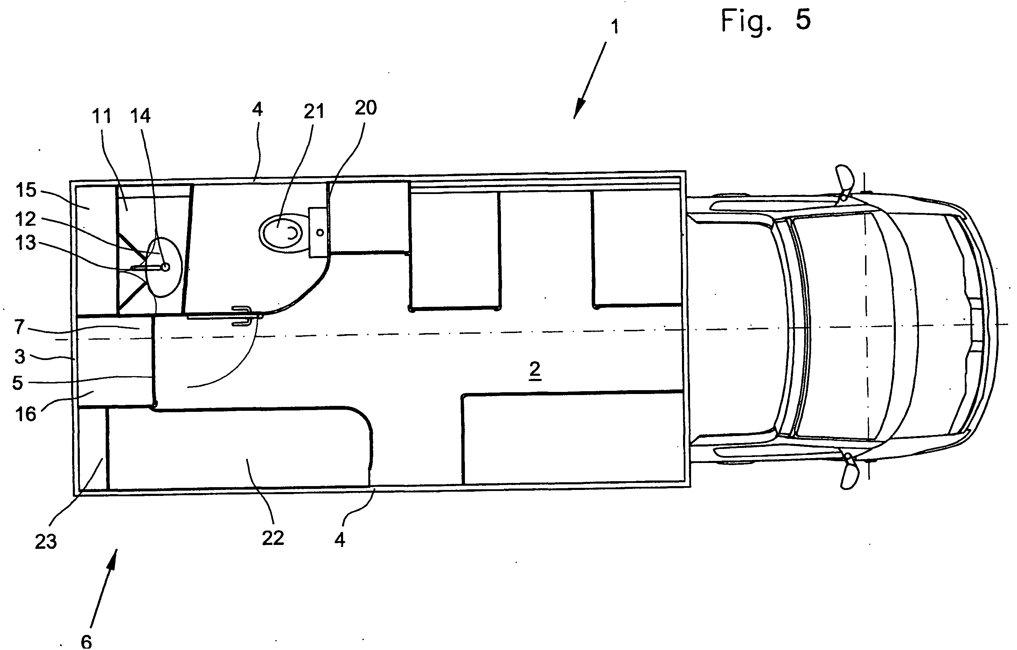

Der Figur 5 ist eine Variation der Kücheneinrichtung zu entnehmen, denn anstatt der sich über der Abdeckung 7 des Stauraumes 6 erstreckenden Arbeitsplatte 17 ist hier eine Liegefläche 22 angebracht, auf der eine Schlafmöglichkeit eingerichtet werden kann.

Aufgrund der besonderen Integration des Stauraumes 6 in das Innenleben des Wohnmobiles 1 ist gewährleistet, daß das vom Stauraum 6 eingenommene Platzvolumen optimal in dem Wohnmobil 1 integriert ist, so daß optisch der Eindruck entsteht, daß der Stauraum 6 Bestandteil der Inneneinrichtungsgegenstände ist. Darüber hinaus geht auch kein unnötiger Platz für die Inneneinrichtungsgegenstände verloren; vielmehr ist der zur Verfügung stehende Raum optimal ausgenutzt.

Es ist auch denkbar, daß die Abdeckung 7 und die Trageplatte 11 aus einem gemeinsamen Bauteil gefertigt sind, so daß das Waschbecken 12 in den Stauraum 6 hineinragt. Auch die Wasserzu- und Abflußleitungen des Wasserhahns und des Waschbeckens 12, 13 sind an der Unterseite der Trageplatte 11 angeordnet und ragen somit in den Stauraum 6 hinein.
Diese Ausführungsvariante nimmt zwar als Nachteil in Kauf, daß durch das Einschieben von sperrigen Gegenständen in den Stauraum 6 die Wasserzu- und Abflußleitungen beschädigt werden können, jedoch ist hierbei vorteilhaft, daß eine Abdeckung 7 entfällt, so daß die Fertigung des Stauraumes 6 weniger kostenintensiv ist, als wenn über die Abdeckung 7 noch eine zusätzliche Trageplatte 11, wie in den Figuren 1 bis 5 dargestellt, montiert wird.

## Patentansprüche

1. Wohnmobil (1), dessen Rückwand (3) und dessen Seitenwände (4) auf einem Fahrgestell (2) abgestützt sind, mit einer in das Innere des Wohnmobils (1) ragenden Zwischenwand (5), wobei die Rückwand (3), die Seitenwände (4) und die Zwischenwand (5) einen quaderförmigen, sich vorzugsweise über die gesamte oder einen großen Teil der Breite des Wohnmobils (1) erstreckenden Stauraum (6) bilden, der mittels einer zwischen der Rückwand (3) und der Zwischenwand (5) angeordneten Abdeckung (7) vom Inneren des Wohnmobils (1) abgetrennt ist,
**dadurch gekennzeichnet,**
**daß** über der Abdeckung (7) eine parallel und beabstandet zu dieser verlaufenden Trageplatte (11) vorgesehen ist, die sich bereichsweise oder über die gesamte Breite des Wohnmobils (1) erstreckt, und daß in die Trageplatte (11) ein Waschbecken (12), Sanitärarmaturen (13, 14) und/oder eine Toilette (21) eingesetzt sind.

2. Wohnmobil nach Anspruch 1,
**dadurch gekennzeichnet,**
**daß** die für die Sanitärarmaturen (13, 14) notwendigen Wasserzu- und Ableitungen zwischen der Trageplatte (11), der Abdeckung (7) und der Zwischenwand (5) angeordnet sind.

3. Wohnmobil nach Anspruch 1 oder 2,
**dadurch gekennzeichnet,**
**daß** über dem Waschbecken (12) oder seitlich neben diesem an der Rückwand (3) ein Spiegelschrank (15), ein Kleiderschrank (16), eine Ablage (23) und/ oder dgl. befestigt ist.

4. Wohnmobil nach Anspruch 3,
**dadurch gekennzeichnet,**
**daß** der Spiegelschrank (15) über dem Waschbecken (12) angeordnet ist.

5. Wohnmobil nach einem oder mehreren der vorgenannten Ansprüche,
**dadurch gekennzeichnet,**
**daß** an einer der beiden Seitenwände (4) oder der Rückwand (3) des Wohnmobils (1) eine zu dieser parallel verlaufenden Arbeitsplatte (17) angebracht ist, die auf der Abdeckung (7) des Stauraums (6) ganz oder teilweise abgestützt ist.

6. Wohnmobil nach Anspruch 5,
**dadurch gekennzeichnet,**
**daß** in die Arbeitsplatte (17) ein Spülbecken (19), verschiedene Sanitärarmaturen, eine Geschirrabtropfaufnahme oder dergleichen eingesetzt ist.

7. Wohnmobil nach einem oder mehreren der vorgenannten Ansprüche,
**dadurch gekennzeichnet,**
**daß** die Trageplatte (11) in einem der beiden Eckbereiche des Wohnmobils (1) angeordnet ist.

8. Wohnmobil nach Anspruch 7,
**dadurch gekennzeichnet,**
**daß** im Inneren des Wohnmobils (1) eine oder mehrere Trennwände (20) vorgesehen sind, durch die das Waschbecken (12) und der Spiegelschrank (15) in einen separaten Waschraum abgetrennt sind.

9. Wohnmobil nach Anspruch 8,
**dadurch gekennzeichnet,**
**daß** in dem Waschraum gegenüber oder seitlich neben dem Waschbecken (12) die Toilette (21) und/ oder eine Duschewanne auf dem Boden des Wohnmobils aufgesetzt ist.

10. Wohnmobil nach einem oder mehreren der vorgenannten Ansprüche,
**dadurch gekennzeichnet,**
**daß** die Oberseite der Abdeckung (7) bereichsweise als Sitz- oder Liegefläche ausgebildet ist.

11. Wohnmobil nach Anspruch 10,
**dadurch gekennzeichnet,**
**daß** seitlich neben der Abdeckung (7) und fluchtend zu dieser eine sich in das Innere des Wohnmobils (1) erstreckende Sitz- oder Liegefläche (22) vorgesehen ist.

## Claims

1. A mobile home (1) with a rear wall (3) and side walls (4) supported on a chassis (2) and a partition wall (5) protruding into the interior of the mobile home (1), in which case the rear wall (3), the side walls (4) and the partition wall (5) form a cuboid storage space (6) extending in a preferred embodiment over the full or a large part of the width of the mobile home (1), the storage space (6) being separated from the interior of the mobile home (1) by means of a cover (7) arranged between the rear wall (3) and the partition wall (5),
**characterised in that**,
a support plate (11) is provided above the cover (7) located parallel to it and at a distance from it, extending along part or all of the width of the mobile home (1), and that a washbasin (12), plumbing fixtures (13, 14) and/or a toilet (21) are inserted in the support plate (11).

2. The mobile home in accordance with claim 1,
**characterised in that**
the water supply and drain pipes required for the plumbing fixtures (13, 14) are arranged between the support plate (11), the cover (7) and the partition wall (5).

3. The mobile home in accordance with claim 1 or 2,
**characterised in that**
a mirror cabinet (15), a wardrobe (16), a shelf unit (23) and/or the like are arranged on the rear wall (3) over the washbasin (12) or to the side adjacent thereto.

4. The mobile home in accordance with Claim 3,
**characterised in that**
the mirror cabinet (15) is arranged over the washbasin (12).

5. The mobile home in accordance with one or more of the above claims,
**characterised in that**
a worktop (17) is arranged in parallel to one of the two side walls (4) or the rear wall (3) of the mobile home (1), the worktop (17) being wholly or partially supported on the cover (7) of the storage space (6).

6. The mobile home in accordance with Claim 5,
**characterised in that**
a sink (19), various plumbing fixtures, a sink drainer or the like are inserted in the worktop (17).

7. The mobile home in accordance with one or more of the above claims,
**characterised in that**
the support plate (11) is arranged in one of the two corner areas of the mobile home (1).

8. The mobiie home in accordance with Claim 7,
**characterised in that**
one or more dividing walls (20) are provided in the interior of the mobile home (1) by means of which the washbasin (12) and the mirror cabinet are partitioned into a separate washroom.

9. The mobile home in accordance with Claim 8,
**characterised in that**
the toilet (21) and/or a shower tray are mounted on the floor of the mobile home in the washroom opposite to or at the side of the washbasin (12).

10. The mobile home in accordance with one or more of the above claims,
**characterised in that**
the top surface of the cover (7) is configured in part as a seat or bunk area.

11. The mobile home in accordance with Claim 10,
**characterised in that**
a seat or bunk area (22) extending into the interior of the mobile home (1) is provided on the side next to the cover (7) and flush with it.

## Revendications

1. Autocaravane (1), dont la paroi arrière (3) et les parois latérales (4) s'appuient sur un châssis (2), avec une paroi intermédiaire (5) orientée vers l'intérieur de l'autocaravane (1), la paroi arrière (3), les parois latérales (4) et la paroi intermédiaire (5) formant un espace cube (6) s'étendant sur toute ou sur une grande partie de la largeur de l'autocaravane (1) et séparé de l'intérieure de l'autocaravane (1) par un recouvrement (7) prévu entre la paroi arrière (3) et la paroi intermédiaire (5),
**caractérisée en ce que**,
au-dessus du recouvrement (7), il est disposé parallèlement et à une certaine distance de celui-ci, une plaque support (11) qui s'étend avec interruptions sur toute la largeur de l'autocaravane (1) et que, dans la plaque support (11), il est intégré un lavabo (12), des équipements sanitaires (13, 14) et/ou une toilette (21).

2. Autocaravane d'après la revendication 1,
**caractérisée en ce que**
les conduites d'arrivée et d'écoulement d'eau nécessaires pour les équipements sanitaires (13, 14) sont arrangées entre la plaque support (11), le recouvrement (7) et la paroi intermédiaire (5).

3. Autocaravane d'après la revendication 1 ou 2,
**caractérisée en ce que**,
au-dessus ou à côté du lavabo (12), il est fixé sur la paroi arrière (3) une armoire à miroir (15), une armoire à vêtements (16), un vestiaire (23) et/ou un dispositif semblable.

4. Autocaravane d'après la revendication 3,
**caractérisée en ce que**
l'armoire à miroir (15) est disposée au-dessus du lavabo (12).

5. Autocaravane d'après une des revendications précédentes,
**caractérisée en ce que**
sur une des deux parois latérales (4) ou sur la paroi arrière (3) de l'autocaravane (1), il est prévu parallèlement une plaque de travail (17), qui s'appuie entièrement ou partiellement sur le recouvrement (7) de l'espace (6).

6. Autocaravane d'après la revendication 5,
**caractérisée en ce que**
la plaque de travail (17) comporte un évier (19), diverses armatures sanitaires, un égouttoir à vaisselle ou un dispositif semblable.

7. Autocaravane d'après une des revendications précédentes,
**caractérisée en ce que**
la plaque support (11) est disposée dans un des deux coins de l'autocaravane (1).

8. Autocaravane d'après la revendication 7,
**caractérisée en ce que**,
à l'intérieur de l'autocaravane (1), il est prévu une ou plusieurs parois de séparation (20) formant un cabinet de toilette séparé pour le lavabo (12) et l'armoire à miroir (15).

9. Autocaravane d'après la revendication 8,
**caractérisée en ce que**,
dans le cabinet de toilette en face ou à côté du lavabo (12), la toilette (21) et/ou le récepteur de douche sont posés sur le fond de l'autocaravane (1).

10. Autocaravane d'après une des revendications précédentes,
**caractérisée en ce que**
certains endroits de la face supérieure du recouvrement (7) sont conçus sous la forme de sièges ou de couchettes.

11. Autocaravane d'après la revendication 10,
**caractérisée en ce que**,
sur le côté du recouvrement (7), il est prévu en ligne un siège ou une couchette (22) orientés vers l'intérieur de l'autocaravane (1).
